(19) Europäisches Patentamt
European Patent Office
Office européen des brevets

(11) Veröffentlichungsnummer: **0 286 933 B1**

(12) **EUROPÄISCHE PATENTSCHRIFT**

(45) Veröffentlichungstag der Patentschrift: **09.02.94**

(51) Int. Cl.⁵: **C08G 59/44**, C08G 59/18, C09D 201/00, C08G 18/80, C08G 18/58

(21) Anmeldenummer: **88105356.5**

(22) Anmeldetag: **02.04.88**

# (54) Härtungskomponente für Kunstharze und deren Verwendung.

(30) Priorität: **09.04.87 DE 3711947**

(43) Veröffentlichungstag der Anmeldung: **19.10.88 Patentblatt 88/42**

(45) Bekanntmachung des Hinweises auf die Patenterteilung: **09.02.94 Patentblatt 94/06**

(84) Benannte Vertragsstaaten: **AT BE CH DE ES FR GB GR IT LI NL SE**

(56) Entgegenhaltungen:
**EP-A- 0 208 867**
**DE-A- 2 640 295**
**US-A- 4 439 593**

(73) Patentinhaber: **HOECHST AKTIENGESELLSCHAFT**

**D-65926 Frankfurt(DE)**

(72) Erfinder: **Brindöpke, Gerhard, Dr.**
**Loreleistrasse 18**
**D-6230 Frankfurt am Main 80(DE)**
Erfinder: **Godau, Claus**
**Halbritter Strasse 9**
**D-6229 Kiedrich(DE)**
Erfinder: **Weber, Walter, Dr.**
**Rheingaustrasse 61**
**D-6238 Hofheim am Taunus(DE)**

**EP 0 286 933 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, daß Alkohole, insbesondere Phenole die Härtungsreaktion zwischen prim. und sek. Amingruppen mit Epoxidharzen beschleunigen (vgl. z.B. US-Patenschrift 3.366.600, DE-Patentschriften 1.043.629 und 2.025.343). Einen ähnlichen Effekt erreicht man auch durch Zusatz von Carbonsäuren, insbesondere Salicylsäure und Milchsäure (vgl. US-Patentschrift 3.026.285).

Die bekannten Kombinationen haben sich zum Teil gut bewährt, zeigen jedoch auch Nachteile, wie z.T. mangelnde Beschleunigung bei tiefen Temperaturen (≦ 5 °C) und bei hoher Luftfeuchte. Die Kombinationen mit phenolischen OH-Gruppen sind aus toxikologischer Sicht bedingt einsatzfähig, zumal wenn die Phenole nicht vollständig in das ausgehärtete Netzwerk eingebaut werden. Dies ist insbesondere ein Nachteil bei der Beschichtung von Behältern, die zur Aufnahme von Stoffen für den Verzehr vorgesehen sind.

Es besteht daher das Bedürfnis nach weiteren Härtungssystemen vor allem für Epoxidharze, wobei diese Härtungssysteme insbesondere bei niedrigen Temperaturen und bei hoher Luftfeuchte genügend reaktiv sein sollen und dessen beschleunigend wirkende Gruppen in das Netzwerk mit eingebaut werden sollen.

Gegenstand der Erfindung ist nun eine aminogruppenhaltige Härtungskomponente (A) für Verbindungen (B), die Epoxid- oder 1,3-Dioxolan-2-on-Gruppen enhalten, dadurch gekennzeichnet, daß die Härtungskomponente (A) ein Umsetzungsprodukt aus CH-aktiven Alkylestern oder aus Addukten von CH-aktiven Alkylestern an Isocyanate, bei denen auf ein Isocyanat äquivalent mindestens 1 Mol CH-aktiver Alkylester kommt ($a_1$), mit Polyaminen ($a_2$) darstellt.

Weiterhin betrifft die Erfindung härtbare Mischungen, welche die Härtungskomponente (A) enthalten sowie die Verwendung dieser Härtungskomponente in härtbaren Mischungen, insbesondere Lackzubereitungen.

Bei der erfindungsgemäßen Härtungskomponente (A) handelt es sich um Polyaminoamide, die beim Umsatz von ($a_1$) CH-aktiven Alkylestern oder deren Addukten an Isocyanate mit ($a_2$) Polyaminen entstehen und mindestens eine -CH-Gruppe mit acidem (aktivem) Wasserstoff enthalten.

Die Komponente ($a_1$) besitzt dabei vorzugsweise die Formel (I)

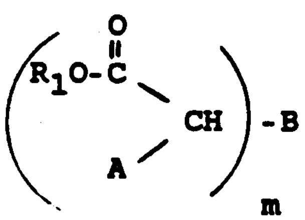 (I)

in der bedeuten

$R_1$ = Kohlenwasserstoffrest mit 1 bis 12 C-Atomen, vorzugsweise ein verzweigter oder unverzweigter aliphatischer Rest mit 1 bis 10, vorzugsweise 1 bis 6 C-Atomen oder ein cycloaliphatischer Rest mit 5 bis 12, vorzugsweise 6 bis 10 C-Atomen, oder ein Aralkylenrest mit 7 bis 12, vorzugsweise 8 bis 10 C-Atomen;

A = CN, $COOR_1$, $CONH_2$, $CONR_1H$, $CONR_1R'_1$, $COR_1$ oder $R_1C=NR'R$, wobei $R_1$ und $R'_1$ gleich oder verschieden sein können und die vorstehende Bedeutung haben; oder weniger bevorzugt $NO_2$;

B = Wasserstoff oder $R_1$ mit vorstehender Bedeutung, wobei in diesen beiden Fällen $m = 1$ ist, oder

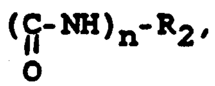

worin $R_2$ einen n-wertigen Kohlenwasserstoffrest, vorzugsweise einen (cyclo)aliphatischen oder aromatischen Rest mit vorzugsweise 1 bis 30 insbesondere 4 bis 20 C-Atomen, der gegebenenfalls durch Heteroatome (O, N)unterbrochen sein kann, darstellt und $m = n \geqq 1$, vorzugsweise 1 bis 10 und insbesondere 1, 2 oder 3 ist.

Vorzugsweise stehen in dieser Formel (I) $R_1$ für ($C_1$-$C_6$)-Alkyl, A für COO($C_1$-$C_6$-Alkyl) oder für CO($C_1$-$C_6$-Alkyl) und B für Wasserstoff oder

$$(\underset{\underset{O}{\|}}{C}-NH)_n-R_2.$$

Beispielsweise seien hier als ($a_1$) Malonsäuredialkylester von Alkohlen mit 1 bis 12 C-Atomen, wie Malonsäuredimethyl-, diethyl-, dibutyl-, diisopropylester, die entsprechenden Ester des Malonsäureamids und dessen N-Alkyl-Derivate, Acetessigsäureester, wie Acetessigsäuremethyl-, ethyl-, -propyl-, butylester sowie die entsprechenden Schiffschen Basen, die entsprechenden Ester der Cyanessigsäure, sowie die Addukte dieser Verbindungen an Isocyanate, wie Mono- oder Polyisocyanate genannt. Die Addukte an Isocyanate sind dabei bevorzugt.

Beispiele für geeignete Monisocyanate sind aliphatische Isocyanate wie n-Butylisocyanat, Octadecylisocyanat, cycloaliphatische Isocyanate wie Cyclohexylisocyanat, araliphatische Isocyanate wie Benzylisocyanat oder aromatische Isocyanate wie Phenylisocyanat.

Als Polyisocyanate werden bevorzugt die leicht zugänglichen Stoffe wie 2,4- und/oder 2,6-Toluylendiisocyanat, Hexamethylendiisocyanat und Isophorondiisocyanat (IPDI) eingesetzt. Weiterhin sind hierfür die aus der Polyurethanchemie bekannten Verbindungen, einschließlich entsprechender Präpolymerer, geeignet. Beispiele für derartige Polyisocyanate sind die aliphatischen Trimethylen-, Tetramethylen-, Pentamethylen-, 1,2-Propylen-, 1,2-Butylen-, 2,3-Butylen-, 1,3-Butylen-, Ethylidin- und Butylidindiisocyanate, 2,2,4-Trimethylhexamethylendiisocyanat, 1,12-Dodecandiisocyanat, Dicycloalkylendiisocyanate wie 1,3-Cyclopentan-, 1,4-Cyclopentan- und 1,2-, 1,3- und 1,4-Cyclohexandiisocyanate; weiterhin Diisocyanate dimerer Säuren, aromatische Diisocyanate, wie 1,3-Phenylen-, 1,4-Phenylen-, 4,4′-Diphenyl-, 1,5-Naphtalin- und 1,4-Naphthalindiisocyanate, die aliphatisch-aromatischen Diisocyanate wie 2,4′- oder 4,4′-Diphenylmethan-, 4,4′-Toluidin- und 1,4-Xylylendiisocyanate, Perhydro 2,4′- und/oder 4,4′-Diphenylmethandiisocyanat, 3,2′- und/oder 3,4-diisocyanato-4-methyl-piphenylmethan, Dianisidindiisocyanat, 4,4′-Diphenyletherdiisocyanat und Chlordiphenylendiisocyanat, die Triisocyanate wie Triphenylmethan-4,4′-4″-Triisocyanat, 1,3,5-Benzoltriisocyanat und 2,4,6-Toluoltriisocyanat, und die Tetraisocyanate, wie 4,4′-Diphenyldimethyldimethan-2,2′-5,5′-tetraisocyanat oder Gemische dieser Verbindungen.

Neben diesen einfachen Polyisocyanten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen und Biuretgruppen aufweisen.

Geeignete Polyisocyanate sind schließlich auch die bekannten, endständige Isocyanatgruppen aufweisenden Präpolymere, wie sie insbesondere durch Umsetzung der obengenannten einfachen Polyisocyanate, vor allem Diisocyanate mit unterschüssigen Mengen an organischen Verbindungen mit mindestens zwei gegenüber Isocyanatgruppen reaktionsfähigen Gruppen zugänglich sind. Als solche kommen insbesondere Verbindungen, die insgesamt mindestens zwei Aminogruppen und/oder Hydroxylgruppen aufweisen, zur Anwendung, wie Alkanolamine, prim., sek und tert. Alkohole mit 1 bis 10 C-Atomen, Di- oder Polyole. Diese mehrwertigen Alkohole sind z.B. Ethandiol, die verschiedenen Propan-, Butan-, Pentan- und Hexandiole, Polyethylen- und Polypropylendiole, Glycerin, Trimethylolethan und -propan, Pentaerythrit, Hexantriol und Sorbit.

Bevorzugt von diesen Isocyanaten sind die Mono-, Di- und Triisocyanate. Im Falle von Polyisocyanaten können freie Isocyanatgruppen, die nicht mit dem CH-aktiven Alkylester umgesetzt wurden, gegebenenfalls mit Polyaminen (Polyaminoalkoholen), Alkoholen udgl. in Harnstoff- bzw. Urethangruppen umgewandelt werden.

Die Polyamine ($a_2$) enthalten mindestens zwei, vorzugsweise 2 bis 10 Aminogruppen, wovon vorzugsweise mindestens zwei primär oder eine primär und eine Sekundär ist. Die Kohlenstoff-Zahl dieser Amine beträgt um allgemeinen 2 bis 40, vorzugsweise 2 bis 20. Ein Teil dieser primären Aminogruppen können blockiert sein, beispielsweise mit Ketonen als Ketimingruppen.

Insbesondere kommen hierfür Polyamine der Formel (II) in Betricht

$$H_2N-(R_3NH)_p-R_4 \quad (II),$$

in der

| | |
|---|---|
| p | Null oder eine ganze Zahl von 1 bis 6, vorzugsweise 1 bis 4 ist, |
| $R_3$ | einen zweiwertigen, vorzugsweise nichtaromatischen Kohlenwasserstoffrest mit 2 bis 18 C-Atomen, vorzugsweise einen verzweigten oder unverzweigten Alkylenrest mit 2 bis 10 C-Atomen, insbesondere mit 2 bis 6 C-Atomen, oder einen Cycloalkylenrest mit 5 bis 12 C-Atomen, vorzugsweise 6 bis 10 C-Atomen, oder einen Aralkylenrest mit 7 bis 12 C- |

Atomen, vorzugsweise 8 bis 10 C-Atomen, darstellt und

$R_4$ für H oder

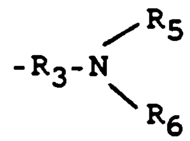

steht, worin $R_3$ die gleiche Bedeutung wie vorstehend hat und

$R_5$, $R_6$ entweder unabhängig voneinander für H, $(C_1\text{-}C_{20})$Alkyl, vorzugsweise $(C_1\text{-}C_6)$Alkyl, Hydroxy$(C_1\text{-}C_{16})$Alkyl, vorzugsweise

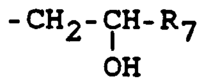

$(R_7$ = H,

$(C_1\text{-}C_{12})$Alkyl, $-CH_2-O-(C_1\text{-}C_{12})$Alkyl, $-CH_2-O-$Aryl,

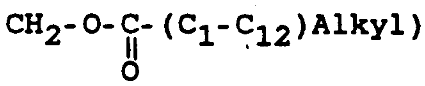 oder 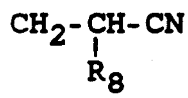

$(R_8$ = H oder $(C_1\text{-}C_6)$Alkyl) stehen oder

$R_5$ und $R_6$ Teil eines 5-, 6- oder 7-gliedrigen aliphatischen Ringes sind, mit der Maßangabe, daß bei m gleich Null $R_4$ nicht gleich H ist.

Daneben sind beispielsweise auch die Polyamine und Polyaminopolyole geeignet, wie sie in den DE-Patentanmeldungen P 36 44 371.9 und P 37 26 497.4 beschrieben sind. Auf diese Literaturstellen, einschließlich der darin beschriebenen bevorzugten Ausführungsformen, wird hiermit Bezug genommen. Weiterhin kommen auch Polyaminoamide sowie Polyglycolpolyamine oder Amin-Addukte, wie Amin-Epoxidharz-Addukte in Betracht.

Beispiele für geeignete Polyamine sind: Ethylendiamin, Propylendiamin, 2-Methylpentamethylendiamin, Hexamethylendiamin, Trimethylhexamethylendiamin, Neopentyldiamin, Octamethylendiamin, Triacetondiamin, Dioxadecandiamin, Dioxadodecandiamin und höhere Homologe, cycloaliphatische Diamine wie 1,2-, 1,3- oder 1,4-Cyclohexandiamin; 4,4'-Methylen-bis-cyclohexylamin, 4,4-Isopropylen-bis-cyclohexylamin, Isophorondiamin, Tricyclododecenyldiamin, Menthandiamin, 4,4'-diamino-3,3'-dimethyl-di-cyclohexylmethan, 3-Aminomethyl-1-(3-aminopropyl-1-methyl)-4-methylcyclohexan, m-Xylylendiamin, N-Methylethylendiamin, Hydroxyethylaminoethylamin, -propylamin, N-Aminoethylpiperazin, 2-Aminoethylpiperazin, N,N-dimethylethylendiamin, -propylendiamin, N,N-Dihydroxyethylethylendiamin, aliphatische Polyamine wie Diethylentriamin, Triethylentetramin, Tetraethylenpentamin, Pentaethylenhexamin, Iminobispropylamin, Methyliminobispropylamin, Bis(hexamethylen)triamin, Tetrapropylenpentamin, Hydroxyethyldiethylentriamin. Weiterhin kommen hier Umsetzungsprodukte von Draminen wie z.B. Ethylendiamin, Propylendiamin, Hexamethylendiamin, Trimethylhexamethylendiamin, m-Xylylendiamin mit endständigen Epoxiden in Frage, wie z.B. Propylenoxid, Styroloxid, Hexanoxid oder mit Glycidylethern wie Phenylglycidylether, Ethylhexylglycidylether, Butyglycidylether oder mit Glycidylestern wie "Cardura E", oder mit ungesättigten Verbindungen wie Acrylnitril, Methacrylnitril. Die Umsetzung hat dabei so zu erfolgen, daß nur eine der vorhandenen zwei primären Aminogruppen alkyliert, d.h. mit den genannten Epoxiden oder ungesättigten Verbindungen umgesetzt wird. Zu diesem Zwecke wird die entsprechende Polyaminoverbindung im Überschuß eingesetzt. Selbstverständlich können auch Mischungen der Amine Verwendung finden.

Die Herstellung der erfindungsgemäßen Härtungskomponente (A) erfolgt nach an sich bekannten Methoden durch Umsatz der Ausgangsverbindungen $(a_1)$ und $(a_2)$ unter Abspaltung von Alkohol und/oder Carbonsäureaminoamiden und/oder Amidinen und Bildung von Polyaminoamiden mit Malonsäureamidstruktur bzw. Methantricarbonsäureamidstruktur.

Die Reaktion kann dabei in Substanz oder vorzugsweise in Gegenwart eines inerten Lösungs- oder Verdünnungsmittels vorgenommen werden. Als inerte Lösungsmittel kommen beispielsweise in Frage: Ether, wie z.B. Diethylether, Tetrahydrofuran, Dioxan, 1,2-Dimethoxyethan, Diethylenglykoldimethylether; Ketone wie Aceton, Methylethylketon, Cyclohexanon; (cyclo)aliphatische und/oder aromatische Kohlenwasserstoffe, wie Hexan, Heptan, Benzol, Toluol, die verschiedenen Xylole oder Gemische dieser Kohlenwasserstoffe; Halogenkohlenwasserstoffe wie Methylenchlorid. Gut geeignet sind auch Lösungsmittel, wie Dimethylformamid und N-Methylpyrrolidon. Die Umsetzung der Komponenten ($a_1$) und ($a_2$) bei der zweckmäßigerweise Temperaturen von 20 bis 120 °C, vorzugsweise von 20 bis 100 °C, angewendet werden, erfolgt vorzugsweise unter vermindertem Druck, beispielsweise zwischen 150 und 20 mbar. Die Anwesenheit eines Katalysators kann dabei vorteilhaft sein. Als Katalysatoren eignen sich saure Katalysatoren beispielsweise Sulfonsäuren wie p-Toluol-sulfosäure, Lewissäuren wie Bortrifluorid, Bortrifluorid-aminkomplexe, Zinkdichlorid, Titanester wei $Ti(OBu)_4$, Carbonsäuren, wie Salicylsäure, und ähnliche. Die Menge an Katalysator beträgt im allgemeinen 0,1 bis 5, vorzugsweise 0,1 bis 0,5 Gew.-%, bezogen auf das Reaktionsgemisch.

Im Falle des bevorzugten Einsatzes eines Adduktes aus CH-aktivem Alkylester und Isocyanat als Komponente ($a_1$) erfolgt die Herstellung dieses Adduktes vorzugsweise unter Inertgasatmosphäre und unter Ausschluß von Feuchtigkeit.

Sofern ein Lösemittel zugegen ist, können beispielsweise die vorstehend genannten Lösungsmittel verwendet werden. Vorzugsweise erfolgt diese Umsetzung in Gegenwart von basischen Verbindungen, wie Alkoholaten, insbesondere Alkalialkoholaten, wie Lithiumbutylat, Natrium- oder Kaliummethylat, Natrium- oder Kaliumphenolat udgl. oder metallischem Natrium, in Mengen von ca. 0,1 bis 5, vorzugsweise 0,1 bis 0,5 Gew.-%, bezogen auf das Gesamtgewicht der Reaktionskomponenten. Isocyanat und CH-aktiver Alkylester werden vorzugsweise in solchen Mengen verwendet, daß auf ein Isocyanat äquivalent mindestens 1 Mol CH-aktiver Alkylester kommt. Es kann auch ein Überschuß an CH-aktivem Alkylester von 10-50 % eingesetzt werden.

Die Herstellung dieses Adduktes ($a_1$) und die Umsetzung mit dem Polyamin ($a_2$) lassen sich auch in einem Arbeitsgang durchführen, wobei die einzelnen Komponenten nacheinander zur C-H-aciden Ausgangskomponente zudosiert werden. Es ist aber auch möglich, diese mit dem vorzugsweise eingesetzten Katalysator zum Isocyanat zu geben und dann das Polyamin zu zudosieren. Man arbeitet dabei im allgemeinen in einem Temperaturbereich von 20 bis 120 °C, vorzugsweise 20 bis 100 °C. Der gebildete Alkohol wird im letzten Schritt unter vermindertem Druck abdestilliert.

Die Mengen an ($a_1$) und ($a_2$) werden in der Regel so gewählt, daß das Äquivalent-Verhältnis von Estergruppen und - soweit vorhanden - von Keto- oder $N=R_1$-Gruppen zu primären/sekundären Aminogruppen wie 1:2 bis 1:20, vorzugsweise 1:5 bis 1:10 beträgt. Der Überschuß an ($a_2$) wird vorzugsweise in der Härtungskomponente (A) belassen.

Durch geeignete Wahl des Mengenverhältnisses von ($a_1$) zu ($a_2$) läßt sich die Bildung von vernetzten (gelierten) Produkten bzw. von höhermolekularen Produkten zurückdrängen. Vorzugsweise enthält die Komponente (A) weniger als 5 Gew.-% insbesondere weniger als 1 Gew.-% an vernetzten und/oder höhermolekularen ($M_w > 5000$) Anteilen.

Die erfindungsgemäße Härtungskomponente (A) enthält mindestens eine acide -CH-Gruppe und besitzt vorzugsweise die nachstehende Formel (III)

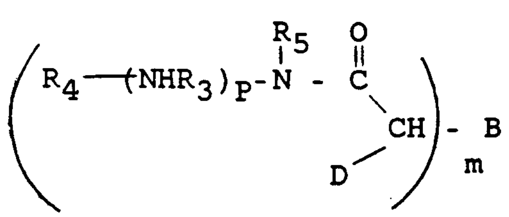
, (III)

in der bedeuten:

| | | |
|---|---|---|
| B und m | = | gleiche Bedeutung wie in Formel (I), |
| $R_3$,$R_4$ und p | = | gleiche Bedeutung wie in Formel (II) |
| $R_5$ | = | Wasserstoff oder gleich $R_1$ wie in Formel (I); |
| D | = | Wasserstoff, CN, |

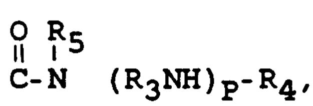

$CONH_2$, $CONR_1H$, $CONR_1R'_1$, $COR_1$ oder $R_1C=NR_1'$, falls B gleich H oder $R_1$;
= Wasserstoff, CN,

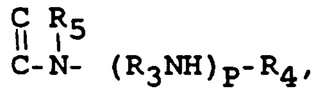

$CONH_2$, $CONR_1H$ oder $CONR_1R_1'$, falls B gleich

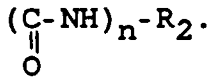

Falls der Rest D primäre sekundäre Aminogruppen enthält, kann über diesen Rest und den Rest $R_4$ oder die sekundären Aminogruppen entsprechend der Gruppierung ($NH-R_3$) eine Molekülvergrößerung erfolgen, wodurch oligomere/polymere Produkte entstehen.

Die Aminzahl der erfindungsgemäßen Komponente (A) beträgt im allgemeinen 60 bis 800, vorzugsweise 150 bis 800 mg KOH/g das Wasserstoff-Äquivalentgewicht zumeist zwischen 30 und 400, vorzugsweise 40 bis 300, und das Molekulargewicht $\overline{M}_w$ (Gewichtsmittel) liegt in der Regel zwischen 200 und 3000, vorzugsweise zwischen 200 und 1000. Die Viskosität von (A) im Gemisch mit überschüssigem ($a_2$) übersteigt in der Regel nicht Werte von 100 000 mPa•s und liegt vorzugsweise zwischen 500 und 15000 mPa•s. Die Zahl an primären und/oder sekundären Aminogruppen pro Molekül (A), beträgt zumeist mindestens 2, vorzugsweise 2 bis 20 und insbesondere 2 bis 10. Falls (A) im Gemisch mit anderen Härtern eingesetzt wird, reicht gegebenenfalls auch nur eine derartige Aminogruppe.

Die erfindungsgemäße Härtungskomponente (A) kann auch in Mischung mit anderen bekannten und damit verträglichen Epoxidharzhärtern verwendet werden, wie Polyaminen (einschließlich von Polyamin-Addukten, z.B. mit Epoxidharzen) oder anderen Polyaminoamiden.

Im Falle der Polyamine sind derartige Mischungen sogar bevorzugt, wobei diese Polyamine vorzugsweise überschüssiges ($a_2$) von der Herstellung der Komponente (A) sind. Die Menge dieser zusätzlichen Härter beträgt zweckmäßigerweise 10 bis 90 Gew.-%, vorzugsweise 30 bis 90 Gew.-%, bezogen auf die Komponente (A).

Die erfindungsgemäße Härtungskomponente (A) kann in härtbaren Mischungen zusammen mit vorzugsweise höhermolekulareren Verbindungen (B), die Epoxid- und/oder 1,3-Dioxolan-2-on-Gruppen enthalten, verwendet werden.

Beispiel für derartige Verbindungen (Kunstharze) (B) sind Polyepoxide, die im Mittel mindestens zwei Epoxidgruppen pro Molekül enthalten. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen und ähnliche.

Vorzugsweise handelt es sich bei diesen Epoxidverbindungen um Polyglycidylether auf Basis von mehrwertigen, vorzugsweise zweiwertigen Alkoholen, Phenolen Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalengewichte dieser Epoxidverbindungen (Epoxidharze) liegen zwischen 100 und 2000, vorzugsweise zwischen 160 und 500. Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4′ -Dihydroxydiphenylcyclohexan, 4,4′-Dihydroxy-3,3′-dimethyldiphenylpropan, 4,4′-Dihydroxydiphenyl, 4,4′-Dihydroxybenzophenon, Bis-(4-hydroxyphenyl)-1,1-ethan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl-)ether, Bis-(4-hydroxyphenyl-)sulfon u.a. sowie die Chlorierungs- und Bromierungsprodukte der vorstehend genannten Verbindungen. Bisphenol A und Bisphenol F sind hierbei besonders bevorzugt.

Auch die Polyglycidylether von mehrwertigen Alkoholen sind geeignet. Als Beispiele derartiger mehrwertige Alkohole seien Ethylenglykol, Diethylenglykol, Triethylenglykol, 1,2-Propylenglykol, Polyoxypropylenglykole (n = 1-10), 1,3-Propylenglykol, 1-4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Als Polyepoxidverbindungen sind für manche Fälle auch Triglycidylisocyanurat oder Triglycidylurazol sowie deren Oligomere geeignet, sowie Epoxynovolakharze.

Diese Polyepoxidverbindungen können auch in Mischung untereinander sowie ggfs. auch in Mischung mit Monoepoxiden eingesetzt werden. Als Monoepoxide sind beispielsweise geeignet: epoxidierte einfachungesättigte Kohlenwasserstoffe (Butylen-Cyclohexan-, Styroloxid), halogenhaltige Epoxide, wie z.B. Epichlorhydrin; Epoxidether einwertiger Alkohole (Methyl-, Ethyl-, Butyl-, 2-Ethylhexyl-, Dodecylalkohol); Epoxidether einwertiger Phenole (Phenole, Kresol sowie andere in o- oder p-Stellung substituierte Phenole); Glycidylester ungesättigter Carbonsäuren, epoxidierte Ester von ungesättigten Alkoholen bzw. ungesättigten Carbonsäuren sowie die Acetale des Glycidaldehyds.

Eine ausführliche Aufzählung der geeigneten Epoxidverbindungen findet sich in dem Handbuch "Epoxdverbindungen und Epoxidharze" von A.M. Paquin, Springer Verlag, Berlin 1958, Kapitel IV, in Lee, Neville "Handbook of Epoxy Resins", 1967, Chapter 2 und Wagner/Sarx, "Lackkunstharze", Carl Hanser Verlag (1971), S. 174 ff.

Eine weitere Gruppe von Polyepoxidverbindungen, für welche die Härter (A) einsetzbar sind, stellen epoxidgruppenhaltige Acrylatharze dar, die in bekannter Weise unter Verwendung von epoxidgruppenhaltigen Monomeren hergestellt werden.

Statt der Polyepoxidverbindungen lassen sich auch deren Umsetzungsprodukte mit $CO_2$ als Komponente (B) einsetzen. Diese Proukte enthalten 1,3-Dioxolan-2-on Gruppen (cyclische Carbonatgruppen), die mit primären Aminen unter Ausbildung von Urethanen umgesetzt werden können. Je nach den Molverhältnissen von Polyepoxidverbindung und $CO_2$ erhält man bei der Reaktion mit $CO_2$ Verbindungen, die keine Epoxidgruppen mehr enthalten, oder Verbindungen, die Epoxidgruppen und cyclische Carbonatgruppen aufweise. Derartige cyclische Carbonatgruppen lassen sich auch über entsprechende Monomere, welche diese Gruppe enthalten, in die Polymerenkette einführen; siehe hierzu die DE-Patentanmeldungen P 36 44 372.7 und P 36 44 373.5.

Die Polypoxidverbindungen oder die cyclische Carbonatgruppen enthaltenden Verbindungen können als solche mit den Härtern (A) zur Reaktion gebracht werden; jedoch ist es häufig vorteilhaft, einen Teil der reaktionsfähigen Epoxidgruppen/cycl. Carbonatgruppen mit einem modifizierenden Material umzusetzen, um die Filmeigenschaften zu verbessern. Besonders bevorzugt ist die Umsetzung der Epoxidgruppen/cycl. Carbonatgruppen mit einem Polyol oder einer Polycarbonsäure.

Das Molekulargewicht (Gewichtsmittel) von Komponente (B), bestimmt mittels Gelchromatographie (Polystyrolstandard), liegt überlicherweise im Bereich von etwa 300 bis etwa 50 000, vorzugsweise etwa 300 bis etwa 20 000.

Komponente (B) und Härter (A) werden im allgemeinen in solchen Verhältnissen gemischt, daß das Äquvalent-Verhältnis von aktiven NH-Gruppen in (A) zu Epoxid- und/oder cycl. Carbonatgruppen in (B) 0,8 bis 1,5 , vorzugsweise 0,9 bis 1,1 beträgt. Zumeist wir hierfür die Menge an (A) bei 20 bis 60 Gew.-% vorzugsweise bei 20 bis 40 Gew.-% bezogen auf (B), liegen. Auf diese Weise wird in der Regel eine ausreichende Vernetzungsdichte erhalten.

Die erfindungsgemäße härtbare Mischung kann gegebenenfalls ein Verdünnungsmittel (C) wie übliche inerte organische Lösungsmittel enthalten. Beispielsweise seien hier genannt: halogenierte Kohlenwasserstoffe, Ether, wie Diethylether, 1,2-Dimethoxyethan, Tetrahydrofuran oder Dioxan; Ketone, wie beispielsweise Methylethylketon, Aceton, Cyclohexanon und ähnliche; Alkohole, wie Methanol, Äthanol, Propanol, Butanol und Benzyalkohol, (cyclo)aliphatische und/oder aromatische Kohlenwasserstoffe, wie Hexan, Heptan, Cyclohexan, Benzol, Toluol, die verschiedenen Xylole sowie aromatische Lösemittel im Siedebereich von ca. 150 bis 180 °C (höhersiedende Mineralölfraktionen, wie ®Solvesso). Die Lösemittel können dabei einzeln oder im Gemisch eingesetzt werden.

Als übliche Zusatzstoffe im Sinne von (D), die eventuell in der erfindungsgemäßen härtbaren Mischung vorhanden sein können, seien hier - in Abhängigkeit von dem jeweiligen Verwendungszweck - die üblichen Lackadditive wie Pigmente, Pigmentpasten, Antioxidantien, Verlauf- bzw. Verdickungsmittel, Entschäumer und/oder Netzmittel, Reaktivverdünner, Füllstoffe, Katalysatoren, zusätzliche Härter und zusätzliche härtbare Verbindungen udgl. genannt. Diese Additive können der Mischung gegebenenfalls erst unmittelbar vor der Verarbeitung zugegeben werden.

Gemäß einer bevorzugten Ausführungsform wird der Härter (A), bevor er der härtbaren Mischung zugegeben wird, zunächst mit einem Teil des Kunstharzes (B), vorzugsweise maximal 40 Gew.-%, umgesetzt. Dadurch wird häufig die Verträglichkeit mit dem Kunstharz (B) verbessert.

Zur Herstellung der erfindungsgemäßen härtbaren Mischungen werden die Komponenten (A) und (B) sowie gegebenenfalls zusätzlich (C) und (D) gemischt. Bei Komponenten mit niedriger Viskosität kann dies

in Substanz erfolgen, wobei gegebenenfalls auf höhere Temperaturen erwärmt wird. Produkte höherer Viskosität werden - falls die härtbaren Mischungen nicht als Pulverlacke eingesetzt werden - vor der Mischung in den erwähnten Verdünnungsmitteln gelöst oder dispergiert.

Die erfindungsgemäßen Mischungen können wegen ihrer günstigen Eigenschaften - vor allem der raschen Aushärtung auch bei tiefen Temperaturen und auch bei hoher Luftfeuchtigkeit unter Einbau des Härters (A) in das Netzwerk - eine vielseitige technische Anwendung finden, z.B. zur Herstellung von Formkörpern (Gießharze) für den Werkzeugbau oder zur Herstellung von Überzügen und/oder Zwischenbeschichtungen auf vielerlei Substraten, z.B. auf solchen organischer oder anorganischer Natur, wie Holz, Holzfaserstoffe (Holzversiegelung), Texilien natürlicher oder synthetischer Herkunft, Kunststoffe, Glas, Keramik, Baustoffe, wie Beton, Faserplatten, Kunststeine, insbesondere jedoch auf Metall. Weiterhin können die erfindungsgemäßen Mischungen als Bestandteile von Klebern, Kitten, Laminierharzen, Kunstharzzementen und insbesondere als Besthandteile von Anstrichmitteln und Lacken zum Beschichten von Industriegegenständen, Haushaltgeräten, Möbeln sowie im Bauwesen, wie z.B. Kühlgeräten, Waschmaschinen, Elektrogeräten, Fenstern, Türen, eingesetzt werden. Das Aufbringen kann beispielsweise durch Streichen, Sprühen, Tauchen udgl. erfolgen.

Ein bevorzugtes Anwendungsgebiet für die erfindungsgemäßen Mischungen sind die Lackzubereitungen.

Die Härtung der erfindungsgemäßen Mischungen läuft sehr rasch ab und erfolgt im allgemeinen bei -10 bis 50 °C, vorzugsweise 0 bis 40 °C. Zum Beispiel erhält man bei +5 °C, und einer relativen Luftfeuchtigkeit von 95 % nach 8 bis 24 Stunden oder bei Raumtemperatur nach 1 bis 5 Stunden bereits Produkte mit guter Härte.

Die Härtungsreaktion läßt sich in einer Stufe durchführen, indem man beispielsweise mit äquivalenten Anteilen der Komponenten (A) und (B) arbeitet. Die Topfzeit und die Eigenschaften des Produktes hängen daher von den Verfahrensbedingungen, d.h. von der Art und der Menge der Ausgangsstoffe, der Temperaturführung etz. ab. So läßt sich die Elastizität des vernetzten Produktes innerhalb eines Toleranzbereiches z.B. durch die Kettenlänge der für (A) und (B) eingesetzten Oligomeren und/oder Polymeren steuern. Obwohl die Härtung in der Regel diskontinuierlich betrieben wird, liegt es auch im Rahmen der Erfindung, das Vermischen der Komponenten und den Reaktionsverlauf kontinuierlich durchzuführen, beispielsweise mittels einer automatischen Lackiervorrichtung.

In den nach folgenden Beispielen bedeuten % jeweils Gew.-% und T jeweils Gew.-Teile. Unter vermindertem Druck wird jeweils derjenige der Wasserstrahlpumpe verstanden. HAV bedeutet Wasserstoff-Äquivalentgewicht. Dieser Wert, die Aminzahl und die Ausbeute sind in den nachfolgenden Beispielen immer auf das Gemisch von Komponente (A) und überschüssigem Polyamin ($a_2$) bezogen.

## Beispiele

I. Herstellung der Härtungskomponente (A)

1. Zu einer Mischung aus 800 T Malonsäurediethylester, 350 T Toluol und 7 T Natriummethylat wurden bei 40 °C innerhalb von 2 Stunden 595 T Phenylisocyanat dosiert und die Temperatur dabei zwischen 40 und 60 °C gehalten. Nach Beendigung der Zugabe wurde bei 60 °C bis zu einem Gehalt an freien N=C=O-Gruppen von 0,5 % nachgerührt. Dann wurden 3400 T meta-Xylylendiamin zugegeben und im Vakuum das gebildete Ethanol und Toluol abdestilliert. Die Temperatur wurde dabei langsam auf 80 °C angehoben. Nach ca. 4 Stunden betrug die Aminzahl 510 und die Ausbeute des hellgelben Härters 4350 T mit einem HAV von 55. Der Gehalt an freiem meta-Xylylendiamin in dem erhaltenen Produkte lag bei ca. 45-50 %.
2. Zu 376,5 T Isophorondiisocyanat wurden bei 60 °C eine Mischung aus 37,5 T Trimethylolpropan, 427,5 T Malonsäurediethylester, 210 T Xylol und 1,7 T Natriummethylat dosiert und die Temperatur dabei bei 60 °C gehalten. Nachdem ein Gehalt an freien N=C=O-Gruppen von ≦ 0,5 % erreicht wurde, wurden 5176 T Isophorondiamin zugegeben und im Vakuum bei 80 °C Lösungsmittel und Ethanol abdestilliert. Nach 4 Stunden war eine Aminzahl von 530 erreicht und die Ausbeute betrug 5844 T. Der Gehalt an freiem Isophorondiamin lag bei ca. 70 %.
3. Anstelle von 5176 T Isophorondiamin in Beispiel 2 wurden 4140 T meta-Xylylendiamin eingesetzt und wie beschrieben das Lösungsmittel und Ethanol abdestilliert Nach 4 Stunden betrug die Ausbeute 4715 T. Der Gehalt an freiem metal-Xylylendiamin war etwa 70 %. Die Aminzahl lag bei 490 und die Viskosität bei 650 mPa•s/25 °C, gemessen als 70 %ige Lösung in Benzylalkohol.
4. Zu 108,8 T 2,4- und 2,6-Toluylendiisocyanat wurden bei 60 °C 65 T Octanol dosiert und bis zu einem Gehalt an freien N=C=O=Gruppen von 18 % nachgerührt. Dann wurden 0,5 T Natriummethylat

zugegeben und 118,5 T Melonsäurediethylester zudosiert. Nach Beendigung der Zugabe wurde bei 60 °C bis zu einem Gehalt an freien N = C = O-Gruppen von ≦ 0,5 % nachgerührt.

140 T dieser Mischung wurden mit 243 T meta-Xylylendiamin versetzt und 32,9 T Ethanol im Vakuum bei 80 °C abdestilliert. Nach ca. 4 Stunden lag die Aminzahl bei 435. Der Gehalt an freiem meta-Xylylendiamin in dem erhaltenen Produkt war ca. 40 %. Nach Zusatz von 150 T Benzylalkohol betrug der HAV des Härters 92.

5a. Zu einer Mischung aus 320 T Malonsäurediethylester, 1 T Natriummethylat und 136 T Xylol wurden bei 40 °C innerhalb 2 Stunden 222 T Isophorondiisocyanat dosiert und die Temperatur zwischen 40 und 60 °C gehalten. Nach weiteren 2 Stunden bei 60 °C lag der N = C = O-Gehalt bei 0,5 %.

5b. Zu 112,5 T dieser Mischung 5a wurden 210 T meta-Xylyendiamin gegeben und im Vakuum bei 80 °C das Lösungsmittel und Ethanol abdestilliert. Nach 4 Stunden lag die Aminzahl bei 493 und die Ausbeute betrug 273 T. Der Gehalt an freiem meta-Xylylendiamin betrug ca. 45 %. Nach Zusatz von 136,5 T Benzylalkohol hatte der Härter einen HAV von 86 und eine Viskosität bei 25 °C von 1200 mPa•s.

5c. Zu 100 T dieser Mischung 5a wurden 214 T Hexamethylendiamin gegeben und wie in Beispiel 5b beschrieben das Läsungsmittel und Ethanol abdestilliert. Nach 4 Stunden war eine Aminzahl von 579 erreicht und die Ausbeute betrug 274 T. Der Gehalt an freiem Hexamethylendiamin lag bei ca. 55 %.

6. Zu einer Lösung aus 168 T Hexamethylendiisocyanat in 500 T Methylenchlorid wurden bei 25 °C innerhalb einer Stunden eine Mischung aus 320 T Malonsäurediethylester und 1 T Natriummethylat dosiert. Dabei stieg die Temperatur auf Rückflußtemperatur an. Bei 35 °C wurde für weitere 2 Stunden nachgerührt. Der Gehalt an freien N = C = O-Gruppen betrug dann 0,2 %. Das Methylenchlorid wurde im Vakuum abdestilliert und man erhielt eine kristalline Verbindung mit einem Schmelzpunkt von 100-120 °C.

Zu 100 T dieser nicht weiter gereinigten Substanz wurden 279 T meta-Xylylendiamin gegeben und im Vakuum bei 60 °C das gebildete Ethanol abdestilliert. Nach 6 Stunden betrug die Aminzahl 530 und die Ausbeute 339 T. Der Gehalt an freiem meta-Xylylendiamin lag bei ca. 50 %. Nach Zugabe von 145 T Benzylalkohol erhielt man einen Härter mit einem HAV von 89.

7. Zu einer Lösung aus 250 T 4,4′-Diphenylmethandiisocyanat und 100 T Toluol wurden bei 40 °C eine Mischung aus 320 T Malonsäurediethylester und 1,5 T Natriummethylat innerhalb 2 Stunden dosiert und dabei die Temperatur zwischen 40 und 60 °C gehalten. Nach einer Nachrührzeit von 2 Stunden bei 60 °C lag der freie N = C = O-Gehalt bei 0,5 %. Zu 120 T dieser Mischung wurden 304 T Isophorondiamin gegeben und das Lösungsmittel und Ethanol analog Beispiel 1 abdestilliert. Nach 4 Stunden erhielt man eine Ausbeute von 368 T mit einer Aminzahl von 393. Der Gehalt an freiem Isophorondiamin betrug ca. 50 %.

8. Zu 130 T Acetessigsäureethylester und 0,2 T Natriummethylat wurden bei 60 °C 119 T Phenylisocyanat dosiert und 5 Stunden bei 60 °C gehalten. Der N = C = O-Gehalt lag dann bei 0,2 % und die Ausbeute betrug 250 T. Die Mischung muß bei 60 °C gehalten werden, da die reine Verbindung bei 56 °C auskristallisiert. Zu dieser Mischung wurden 340 T meta-Xylylendiamin gegeben und wie in Beispiel 1 beschrieben das Ethanol abdestilliert. Nach ca. 4 Stunden betrug die Aminzahl 310 und die Ausbeute 542 T. Der Gehalt an freiem meta-Xylylendiamin betrug ca. 12 %. Diese Mischung wurde 425 T Isophorondiamin verdünnt und man erhielt einen Härter mit einem HAV von 60.

II. Herstellung der härtbaren Mischungen und anwendungstechnischen Prüfung des Härtungsproduktes

Die in nachstehender Tabelle angegebenen Gewichtsmengen der Komponente (A) wurden mit den angegebene äquimolaren Mengen einer bei Raumtemperatur flüssigen Epoxidverbindung (→ Komponente (B)), nämlich eines Diglycidylethers von Bisphenol A (Epoxidäquivalentgewicht: 186; Viskosität: ca. 10 000 m•Pas bei 25 °C; ®Beckopox EP 140), gemischt. Das erhaltene Beschichtungesmaterial wurde mittels eines Aufziehrakels in einer Filmstärke von 200 µm auf Glasplatten aufgezogen (Klarlackfilm) und bei Raumtemperatur bzw. 5 °C und einer relativen Luftfeuchtigkeit von 95 % 24 Stunden bzw. 7 Tage gehärtet. Als Vergleich dazu wurde eine Mannichbase aus Phenol, meta-Xylylendiamin und Formaldehyd analog der DE-Offenlegungsschrift 2 025 343, Beispiel 1 geprüft (Gehalt an freiem Phenol: ca. 17 Gew.-%). Die in der nachstehenden Tabelle benutzten Abkürzungen bedeuten:

| | | |
|---|---|---|
| K | = | Klimaschrank 5 °C/95 % r.F. |
| RT | = | Raumtemperatur |
| BzOH | = | Benzylalkohol |
| EP 140 | = | Diglycidylether vom Bisphenol A |
| Tg | = | Tage |

**Tabelle**

| Beispiel | Komponente (A) | | Komponente (B) | BzOH | Topfzeit | Pendelhärte nach König (s) | | | |
|---|---|---|---|---|---|---|---|---|---|
| | Typ | Menge | (EP 140) Menge | Menge | (min) | nach 1 Tg RT | nach 7 Tg RT | nach 1 Tg K | nach 7 Tg K |
| 1 | A 1 | 23,1 | 76,9 | - | 17 | 206 | 206 | 19 | 127 |
| 2 | A 2 | 23 | 61,6 | 15,4 | 29 | 165 | 198 | 22 | 120 |
| 3 | A 3 | 16,1 | 71,8 | 12,1 | 23 | 183 | 187 | 63 | 154 |
| 4 | A 4 | 33,1 | 66,9 | - | 19 | 97 | 146 | 14 | 116 |
| 5 | A 5b | 30,1 | 69,9 | - | 15 | 147 | 185 | 45 | 105 |
| 6 | A 6 | 32,2 | 67,8 | - | 23 | 133 | 170 | 37 | 80 |
| 7 | A 7 | 24,7 | 64,6 | 10,6 | 26 | 131 | 171 | 6 | 40 |
| 8 | A 8 | 24,4 | 75,6 | - | 26 | 103 | 157 | 64 | 94 |
| Vergl. | Mannich-Base | 27,9 | 72,1 | - | 18 | 190 | 210 | 46 | 130 |

**Patentansprüche**

**Patentansprüche für folgende Vertragsstaaten : AT, BE, CH, LI, DE, FR, GB, GR, IT, NL, SE**

1. Aminogruppenhaltige Härtungskomponente (A) für Verbindungen (B), die Epoxid- oder 1,3-Dioxolan-2-on-Gruppen enthalten, dadurch gekennzeichnet, daß die Härtungskomponente (A) ein Umsetzungsprodukt aus CH-aktiven Alkylestern oder aus Addukten von CH-aktiven Alkylestern an Isocyanate, bei denen auf ein Isocyanat äquivalent mindestens 1 Mol CH-aktiver Alkylester kommt ($a_1$), mit Polyaminen ($a_2$) darstellt.

2. Härtungskomponente nach Anspruch 1, dadurch gekennzeichnet, daß ($a_1$) die Formel (I) besitzt

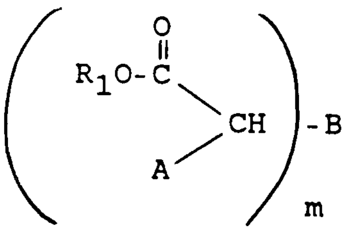

(I)

in der bedeuten

$R_1$ = Kohlenwasserstoffrest mit 1 bis 12-C-Atomen;
A = CN, $COOR_1$, $CONH_2$, $CONR_1H$, $CONR_1R_1'$, $COR_1$, $R_1C=NR_1$ oder $NO_2$, wobei $R_1$ und $R'_1$ gleich oder verschieden sein können und vorstehende Bedeutung haben;
B = Wasserstoff oder $R_1$ mit vorstehender Bedeutung, wobei in diesen beiden Fällen m = 1 ist; oder

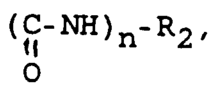

worin $R_2$ einen n-wertigen Kohlenwasserstoffrest, der gegebenenfalls durch Heteroatome (O, N) unterbrochen sein kann, darstellt und m = n ≧ 1, vorzugsweise 1 bis 10 ist.

3. Härtungskomponente nach Anspruch 2, dadurch gekennzeichnet, daß in Formel (I) $R_1$ für ($C_1$-$C_6$)-Alkyl, A für COO($C_1$-$C_6$-Alkyl) oder für CO($C_1$-$C_6$-Alkyl) und B für Wasserstoff oder

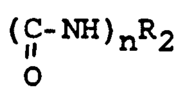

stehen

4. Härtungskomponente nach Anspruch 2 und/oder 3, dadurch gekennzeichnet, daß n 1, 2 oder 3 bedeutet.

5. Härtungskomponente nach mindestens einem der Ansprüche 1 bis 4, dadurch gekennzeichnet, daß ($a_1$) ein Ester der Malonsäure, Acetessigsäure oder Cyanessigsäure mit 1 bis 6 C-Atomen im Esterrest oder ein Addukt dieser Verbindungen an Isocyanate ist.

6. Härtungskomponente nach mindestens einem der Ansprüche 1 bis 5, dadurch gekennzeichnet, daß ($a_2$) mindestens zwei primäre Aminogruppen oder eine primäre und eine sekundäre Aminogruppe enthält.

7. Härtungskomponente nach mindestens einem der Ansprüche 1 bis 6, dadurch gekennzeichnet, daß ($a_2$) die Formel (II) aufweist

$H_2N\text{-}(R_3NH)_p\text{-}R_4$ (II),

in der

- p Null oder eine ganze Zahl von 1 bis 6, vorzugsweise 1 bis 4 ist,
- $R_3$ einen zweiwertigen, vorzugsweise nichtaromatischen Kohlenwasserstoffrest mit 2 bis 18 C-Atomen, vorzugsweise einen verzweigten oder unverzweigten Alkylenrest mit 2 bis 10 C-Atomen, oder einen Cycloalkylenrest mit 5 bis 12 C-Atomen, oder einen Aralkylenrest mit 7 bis 12 C-Atomen darstellt und
- $R_4$ für H oder

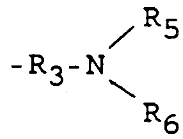

steht, worin $R_3$ die gleiche Bedeutung wie vorstehend hat und

- $R_5$, $R_6$ entweder unabhängig voneinander für H, $(C_1$-$C_{20})$Alkyl, Hydroxy$(C_1$-$C_{16})$Alkyl, vorzugsweise

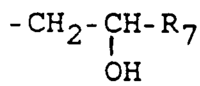 $(R_7 = H,$

$(C_1$-$C_{12})$Alkyl, -$CH_2$-O-$(C_1$-$C_{12})$Alkyl, -$CH_2$-O-Aryl,

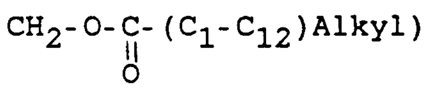 oder 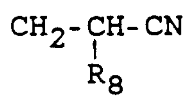

$(R_8 = H$ oder $(C_1$-$C_6)$Alkyl) stehen oder

- $R_5$ und $R_6$ Teil eines 5-, 6- oder 7-gliedrigen aliphatischen Ringes sind, mit der Maßangabe, daß bei m gleich Null $R_4$ nicht gleich H ist.

**8.** Härtungskomponente nach mindestens einem der Ansprüche 1 bis 7, dadurch gekennzeichnet, daß die Esteräquivalente von $(a_1)$, sowie die gegebenenfalls vorhandenen C=O- oder N=$R'_1$-Äquivalente, zu den Aminäquivalenten von $(a_2)$ 1:2 bis 1:20 betragen.

**9.** Härtungskomponente nach mindestens einem der Ansprüche 1 bis 8, dadurch gekennzeichnet, daß sie die Formel III

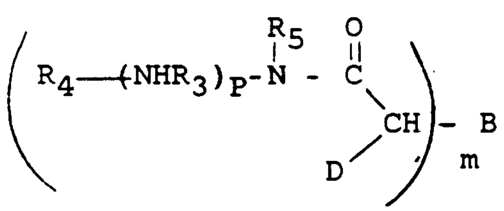 (III)

besitzt, in der bedeuten

| | | |
|---|---|---|
| B und m | = | gleiche Bedeutung wie in Formel (I), |
| $R_3$,$R_4$ und p | = | gleiche Bedeutung wie in Formel (II) |
| $R_5$ | = | Wasserstoff oder gleich $R_1$ wie in Formel (I); |
| D | = | Wasserstoff, CN, |

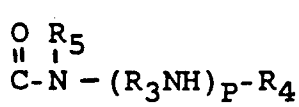

$CONH_2$, $CONR_1H$, $CONR_1R'_1$, $COR_1$ oder $R_1C=NR_1'$, falls B gleich H oder $R_1$;
= Wasserstoff, CN,

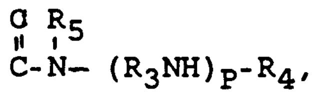

$CONH_2$, $CONR_1H$ oder $CONR_1R_1'$, falls B gleich

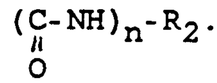

**10.** Härtbare Mischung auf Basis
einer Härtungskomponente (A),
einer Verbindung (B), das Epoxid- und/oder 1,3-Dioxolan-2-on-Gruppen enthält,
gegebenenfalls einem Verdünnungsmittel (C) sowie
gegebenenfalls Zusatzstoffen (D), dadurch gekennzeichnet, daß als Härtungskomponente die Komponente (A) gemäß einem oder mehreren der Ansprüche 1 bis 8 enthalten ist.

**11.** Härtbare Mischung nach Anspruch 10, dadurch gekennzeichnet, daß die Härtungskomponente (A) bereits mit einem Teil der Verbindung (B) umgesetzt wurde.

**12.** Härtbare Mischung nach Anspruch 10 und/oder 11, dadurch gekennzeichnet, daß die Komponente (B) ein Epoxidharz mit einem mittleren Molekulargewicht ($\overline{M}_w$) von etwa 300 bis etwa 20000 ist.

**13.** Verwendung der Härtungskomponente gemäß mindestens einem der Ansprüche 1 bis 9 in härtbaren Mischungen, insbesondere Lackzubereitungen.

**Patentansprüche für folgenden Vertragsstaat : ES**

**1.** Verfahren zur Herstellung einer aminogruppenhaltigen Härtungskomponente (A) für Verbindungen (B), die Epoxid- oder 1,3-Dioxolan-2-on-Gruppen enthalten, dadurch gekennzeichnet, daß CH-aktive Alkylester oder Addukte von CH-aktiven Alkylestern an Isocyanate, bei denen auf ein Isocyanat äquivalent mindestens 1 Mol CH-aktiver Alkylester kommt ($a_1$), mit Polyaminen ($a_2$) umgesetzt werden.

**2.** Verfahren nach Anspruch 1, dadurch gekennzeichnet, daß die Umsetzung bei Temperaturen von 20 bis 120 °C erfolgt.

**3.** Verfahren nach Anspruch 1 und/oder 2, dadurch gekennzeichnet, daß als Verbindungen ($a_1$) solche der nachstehenden Formel (I) eingesetzt werden

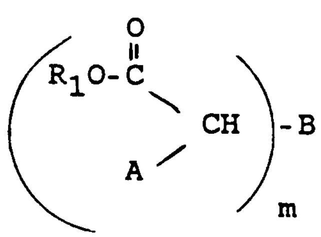

(I)

in der bedeuten
$R_1$ = Kohlenwasserstoffrest mit 1 bis 12-C-Atomen;
A = CN, $CONH_2$, $CONR_1H$, $CONR_1R_1'$, $COR_1$, $R_1C=N_1'$ oder $NO_2$, wobei $R_1$ und $R'_1$ gleich oder verschieden sein können und vorstehende Bedeutung haben;
B = Wasserstoff oder $R_1$ mit vorstehender Bedeutung, wobei in diesen beiden Fällen m = 1

ist; oder

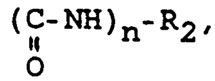

worin $R_2$ einen n-wertigen Kohlenwasserstoffrest, der gegebenenfalls durch Heteroatome (O, N) unterbrochen sein kann, darstellt und m = n ≧ 1, vorzugsweise 1 bis 10 ist.

**4.** Verfahren nach Anspruch 3, dadurch gekennzeichnet, daß in Formel (I) $R_1$ für $(C_1$-$C_6)$Alkyl, A für COO-($C_1$-$C_6$-Alkyl) oder für CO($C_1$-$C_6$-Alkyl) und B für Wasserstoff oder

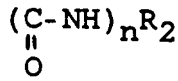

stehen

**5.** Verfahren nach Anspruch 3, und/oder 4, dadurch gekennzeichnet, daß n 1, 2 oder 3 bedeutet.

**6.** Verfahren nach mindestens einem der Ansprüche 1 bis 5, dadurch gekennzeichnet, daß ($a_1$) ein Ester der Malonsäure, Acetessigsäure oder Cyanessigsäure mit 1 bis 6 C-Atomen im Esterrest oder ein Addukt dieser Verbindungen an Isocyanate ist.

**7.** Verfahren nach mindestens einem der Ansprüche 1 bis 6, dadurch gekennzeichnet, daß ($a_2$) mindestens zwei primäre Aminogruppen oder eine primäre und eine sekundäre Aminogruppe enthält.

**8.** Verfahren nach mindestens einem der Ansprüche 1 bis 7, dadurch gekennzeichnet, daß ($a_2$) die Formel (II) aufweist

$H_2N$-$(R_3NH)_p$-$R_4$ (II),

in der

p: Null oder eine ganze Zahl von 1 bis 6, vorzugsweise 1 bis 4 ist,

$R_3$: einen zweiwertigen, vorzugsweise nichtaromatischen Kohlenwasserstoffrest mit 2 bis 18 C-Atomen, vorzugsweise einen verzweigten oder unverzweigten Alkylenrest mit 2 bis 10 C-Atomen, oder einen Cycloalkylenrest mit 5 bis 12 C-Atomen, oder einen Aralkylenrest mit 7 bis 12 C-Atomen darstellt und

$R_4$: für H oder

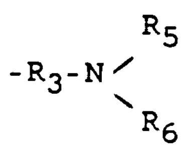

steht, worin $R_3$ die gleiche Bedeutung wie vorstehend hat und

$R_5$, $R_6$: entweder unabhängig voneinander für H, $(C_1$-$C_{20})$Alkyl, Hydroxy$(C_1$-$C_{16})$Alkyl, vorzugsweise

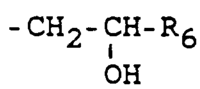 ($R_6$ = H,

$(C_1$-$C_{12})$Alkyl, -$CH_2$-O-$(C_1$-$C_{12})$Alkyl, -$CH_2$-O-Aryl,

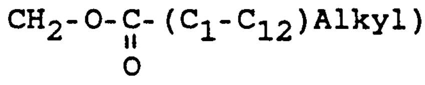 oder 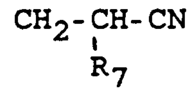

($R_7$ = H oder ($C_1$-$C_6$)Alkyl) stehen oder

$R_5$ und $R_6$ Teil eines 5-, 6- oder 7-gliedrigen aliphatischen Ringes sind, mit der Maßangabe, daß bei m gleich Null $R_4$ nicht gleich H ist.

**9.** Verfahren nach mindestens einem der Ansprüche 1 bis 8, dadurch gekennzeichnet, daß die Esteräquivalente von ($a_1$) sowie die gegebenenfalls vorhandenen C=O- oder N=R'$_1$-Äquivalente, zu den Aminäquivalenten von ($a_2$) 1:2 bis 1:20 betragen.

**10.** Härtbare Mischung auf Basis
einer Härtungskomponente (A),
einer Verbindung (B), das Epoxid- und/oder 1,3-Dioxolan-2-on-Gruppen enthält,
gegebenenfalls einem Verdünnungsmittel (C) sowie
gegebenenfalls Zusatzstoffen (D), dadurch gekennzeichnet, daß als Härtungskomponente die Komponente (A) gemäß einem oder mehreren der Ansprüche 1 bis 8 enthalten ist.

**11.** Härtbare Mischung nach Anspruch 10, dadurch gekennzeichnet, daß die Härtungskomponente (A) bereits mit einem Teil der Verbindung (B) umgesetzt wurde.

**12.** Härtbare Mischung nach Anspruch 10 und/oder 11, dadurch gekennzeichnet, daß die Komponente (B) ein Epoxidharz mit einem mittleren Molekulargewicht ($\overline{M}_w$) von etwa 300 bis etwa 20000 ist.

**13.** Verwendung der Härtungskomponente gemäß mindestens einem der Ansprüche 1 bis 9 in härtbaren Mischungen, insbesondere Lackzubereitungen.

**Claims**

**Claims for the following Contracting States : AT, BE, CH, LI, DE, FR, GB, GR, IT, NL, SE**

**1.** An amino group-containing curing component (A) for compounds (B) containing epoxy or 1,3-dioxolan-2-one groups, wherein the curing component (A) is a reaction product from ($a_1$) active CH alkyl eaters or from isocyanate adducts of active CH alkyl eaters where there is at least 1 mol of active CH alkyl ester per isocyanate equivalent with ($a_2$) polyamines.

**2.** A curing component as claimed in claim 1, wherein ($a_1$) has the formula (I)

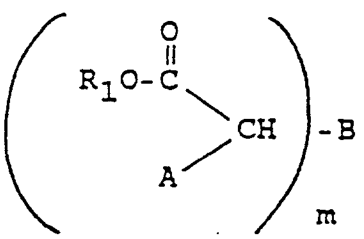 (I)

in which

$R_1$ denotes a hydrocarbon radical having 1 to 12 carbon atoms,

A denotes CN, $COOR_1$, $CONH_2$, $CONR_1H$, $CONR_1R'_1$, $COR_1$ or $R_1C=NR_1$ or $NO_2$, it being possible for $R_1$ and $R'_1$ to be identical or different and to have the above-mentioned meaning;

B denotes hydrogen or $R_1$ having the abovementioned meaning, m being 1 in both cases; or denotes

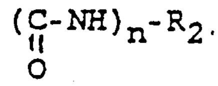

in which $R_2$ represents an n-valent hydrocarbon radical, which can optionally be interrupted by hetero atoms (O, N) and m denotes $n \geqq 1$, preferably 1 to 10.

**3.** A curing component as claimed in claim 2, wherein in formula (I) $R_1$ stands for $(C_1\text{-}C_6)$-alkyl, A stands for $COO(C_1\text{-}C_6\text{-alkyl})$ or for $CO(C_1\text{-}C_6\text{-alkyl})$ and B stands for hydrogen or

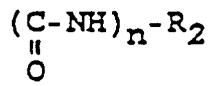

**4.** A curing component as claimed in claim 2 and/or 3, wherein n denotes 1, 2 or 3.

**5.** A curing component as claimed in at least one of claims 1 to 4, wherein ($a_1$) is an ester of malonic acid, acetoacetic acid or cyanoacetic acid having 1 to 6 carbon atoms in the ester radical or is an isocyanate adduct of these compounds.

**6.** A curing component as claimed in at least one of claims 1 to 5, wherein ($a_2$) contains at least two primary amino groups or a primary and a secondary amino group.

**7.** A curing component as claimed in at least one of claims 1 to 6, wherein ($a_2$) has the formula (II)

$H_2N\text{-}(R_3NH)_p\text{-}R_4$ (II)

in which

p is zero or an integer from 1 to 6, preferably 1 to 4,

$R_3$ represents a divalent, preferably nonaromatic, hydrocarbon radical having 2 to 18 carbon atoms, preferably a branched or unbranched alkylene radical having 2 to 10 carbon atoms, or a cycloalkylene radical having 5 to 12 carbon atoms, or an aralkylene radical having 7 to 12 carbon atoms, and

$R_4$ stands for H or

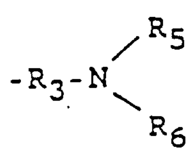

in which $R_3$ has the same meaning as above, and

$R_5$, $R_6$ either independently of each other stand for H, $(C_1\text{-}C_{20})$-alkyl, hydroxy-$(C_1\text{-}C_{16})$-alkyl, preferably

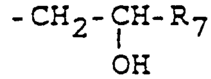 $(R_7 = H,$

$(C_1\text{-}C_{12})$-alkyl, $-CH_2\text{-}O\text{-}(C_1\text{-}C_{12})$-alkyl, $-CH_2\text{-}O\text{-aryl}$,

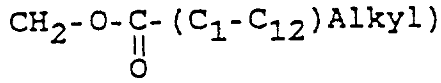 ($R_8$ = H

or

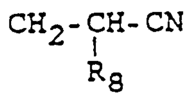

or ($C_1$-$C_6$)-alkyl) or

$R_5$ and $R_6$ are part of a 5-, 6- or 7-membered aliphatic ring, with the measurement that, if m equals zero, $R_4$ is not equal to H.

**8.** A curing component as claimed in at least one of claims 1 to 7, wherein the ester equivalents of ($a_1$) and also the C = O- or N = R'$_1$ equivalents which may be present, relative to the amino equivalents of ($a_2$) are 1:2 to 1:20.

**9.** A curing component as claimed in at least one of claims 1 to 8, having the formula III

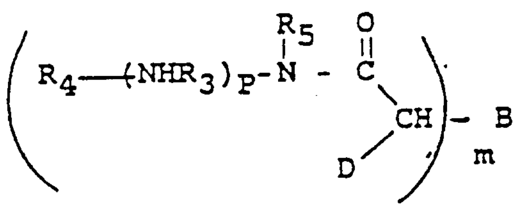 (III)

in which
B and m have the same meaning as in formula (I),
$R_3$, $R_4$ and p have the same meaning as in formula (II)
$R_5$ denotes hydrogen or $R_1$ as in formula (I);
D denotes hydrogen, CN,

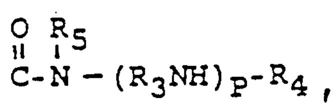

$CONH_2$, $CONR_1H$, $CONR_1R'_1$, $COR_1$ or $R_1C = NR_1'$, if B denotes H or $R_1$;
denotes hydrogen, CN,

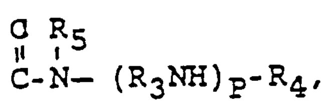

$CONH_2$, $CONR_1H$ or $CONR_1R_1'$, if B denotes

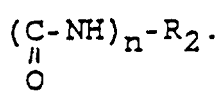

**10.** A curable mixture based on
a curing component (A),
a compound (B) containing epoxy and/or 1,3-dioxolan-2-one groups,
if desired, a diluent (C) and also

if desired, additives (D), containing the component (A) as claimed in one or more of claims 1 to 8 as the curing component.

**11.** A curable mixture as claimed in claim 10, wherein the curing component (A) has already been reacted with some of compound (B).

**12.** A curable mixture as claimed in claim 10 and/or 11, wherein component (B) is an epoxy resin having an average molecular weight ($\overline{M}_w$) of about 300 to about 20,000.

**13.** Use of the curing component as claimed in at least one of claims 1 to 9 in curable mixtures, in particular in paint formulations.

**Claims for the following Contracting State : ES**

**1.** A process for preparing an amino group-containing curing component (A) for compounds (B) containing epoxy or 1,3-dioxolan-2-one groups, which comprises reacting ($a_1$) active CH alkyl esters or isocyanate adducts of active CH alkyl esters where there is at least 1 mol of active CH alkyl ester per isocyanate equivalent with ($a_2$) polyamines.

**2.** The process of claim 1, wherein the reaction is carried out at temperatures from 20 to 120 °C.

**3.** The process of claim 1 and/or 2, wherein component ($a_1$) has the following formula (I)

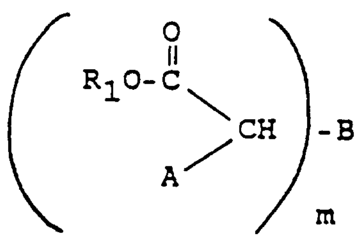

(I)

in which

- $R^1$ denotes a hydrocarbon radical having 1 to 12 carbon atoms;
- A denotes CN, $CONH_2$, $CONR_1H$, $CONR_1R'_1$, $COR_1$, $R_1C=N_1$ or $NO_2$, it being possible for $R_1$ and $R'_1$ to be identical or different and to have the abovementioned meaning;
- B denotes hydrogen or $R_1$ having the abovementioned meaning, m being 1 in both cases; or denotes

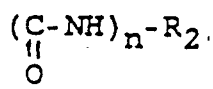

in which $R_2$ represents an n-valent hydrocarbon radical, which can optionally be interrupted by hetero atoms (O, N) and m denotes n ≧ 1, preferably 1 to 10.

**4.** The process of claim 3, wherein in formula (I) $R_1$ stands for ($C_1$-$C_6$)-alkyl, A stands for COO($C_1$-$C_6$-alkyl) or for CO($C_1$-$C_6$-alkyl) and B stands for hydrogen or

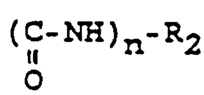

**5.** The process of claim 3 and/or 4, wherein n denotes 1, 2 or 3.

**6.** The process of at least one of claims 1 to 5, wherein ($a_1$) is an ester of malonic acid, acetoacetic acid or cyanoacetic acid having 1 to 6 carbon atoms in the ester radical or is an isocyanate adduct of these compounds.

**7.** The process of at least one of claims 1 to 6, wherein ($a_2$) contains at least two primary amino groups or a primary and a secondary amino group.

**8.** The process of at least one of claims 1 to 7, wherein ($a_2$) has the formula (II)

$H_2N-(R_3NH)_p-R_4$ (II)

in which

p is zero or an integer from 1 to 6, preferably 1 to 4,

$R_3$ represents a divalent, preferably nonaromatic, hydrocarbon radical having 2 to 18 carbon atoms, preferably a branched or unbranched alkylene radical having 2 to 10 carbon atoms, or a cycloalkylene radical having 5 to 12 carbon atoms, or an aralkylene radical having 7 to 12 carbon atoms, and

$R_4$ stands for H or

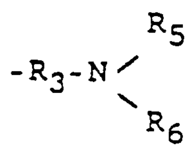

in which $R_3$ has the same meaning as above, and

$R_5$, $R_6$ either independently of each other stand for H, ($C_1$-$C_{20}$)-alkyl, hydroxy-($C_1$-$C_{16}$)-alkyl, preferably

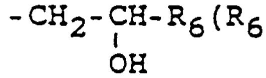

**($R_6$ = H,**

($C_1$-$C_{12}$)alkyl, -$CH_2$-O-($C_1$-$C_{12}$)-alkyl, -$CH_2$-O-aryl,

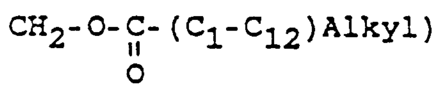

**or**

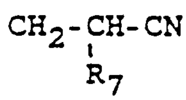

**($R_7$ = H**

or ($C_1$-$C_6$)-alkyl) or

$R_5$ and $R_6$ are part of a 5-, 6- or 7-membered aliphatic ring, with the measurement that, if m equals zero, $R_4$ is not equal to H.

**9.** The process of at least one of claims 1 to 8, wherein the ester equivalents of ($a_1$) and also the C=O- or N=R'$_1$ equivalents which may be present, relative to the amino equivalents of ($a_2$) are 1:2 to 1:20.

**10.** A curable mixture based on
a curing component (A),
a compound (B) containing epoxy and/or 1,3-dioxolan-2-one groups,
if desired, a diluent (C) and also
if desired, additives (D), containing the component (A) as claimed in one or more of claims 1 to 8 as

the curing component.

**11.** A curable mixture as claimed in claim 10, wherein the curing component (A) has already been reacted with some of compound (B).

**12.** A curable mixture as claimed in claim 10 and/or 11, wherein component (B) is an epoxy resin having an average molecular weight ($\overline{M}_w$) of about 300 to about 20,000.

**13.** The use of the curing component as claimed in at least one of claims 1 to 9 in curable mixtures, in particular paint formulations.

**Revendications**
**Revendications pour les Etats contractants suivants : AT, BE, CH, LI, DE, FR, GB, GR, IT, NL, SE**

**1.** Composant durcisseur (A) contenant des groupes amino pour des composés (B) qui contiennent des groupes époxyde ou 1,3-dioxolanne-2-one, caractérisé en ce que le composant durcisseur (A) est un produit de la réaction, avec des polyamines ($a_2$), d'esters alkyliques à CH actifs ou de produits d'addition d'esters alkyliques à CH actifs sur des isocyanates, dans lesquels au moins 1 mol d'ester alkylique à CH actif est fixé sur un équivalent d'isocyanate ($a_1$).

**2.** Composant durcisseur selon la revendication 1, caractérisé en ce que ($a_1$) a la formule (I)

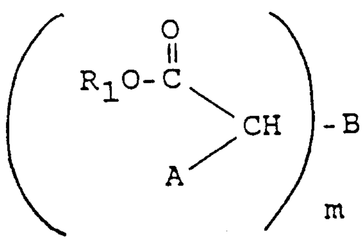

(I)

dans laquelle
$R_1$ = un radical hydrocarboné ayant de 1 à 12 atomes de carbone ;
A = CN, $COOR_1$, $CONH_2$, $CONR_1H$, $CONR_1R_1'$, $COR_1$, $R_1C=NR_1$ ou $NO_2$, où $R_1$ et $R'_1$ peuvent être identiques ou différents et ont la signification ci-dessus ;
B = un hydrogène ou $R_1$ avec la signification ci-dessus, avec dans ces deux cas m = 1 ; ou bien

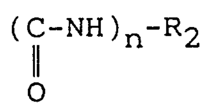

où $R_2$ est un radical hydrocar boné à n valences pouvant être éventuellement interrompu par des hétéroatomes (O, N), et m = n ≧ 1, de préférence de 1 à 10.

**3.** Composant durcisseur selon la revendication 2, caractérisé en ce que, dans la formule (I), $R_1$ est un radical alkyle en $C_1$-$C_6$, A est un radical COO(alkyle en $C_1$-$C_6$) ou CO(alkyle en $C_1$-$C_6$), et B est un hydrogène ou le radical

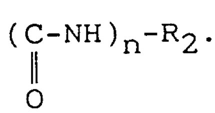

**4.** Composant durcisseur selon la revendication 2 et/ou 3, caractérisé en ce que n vaut 1, 2 ou 3.

**5.** Composant durcisseur selon au moins l'une des revendications 1 à 4, caractérisé en ce que ($a_1$) est un ester de l'acide malonique, de l'acide acétoacétique ou de l'acide cyanoacétique ayant de 1 à 6 atomes de carbone dans le fragment ester, ou un produit d'addition de ces composés sur des isocyanates.

**6.** Composant durcisseur selon au moins l'une des revendications 1 à 5, caractérisé en ce que ($a_2$) contient au moins deux groupes amino primaire ou un groupe amino primaire et un groupe amino secondaire.

**7.** Composant durcisseur selon au moins l'une des revendications 1 à 6, caractérisé en ce que ($a_2$) a la formule (II)

$H_2N-(R_3NH)_p-R_4$ (II),

dans laquelle

p vaut zéro ou est un nombre entier de 1 à 6, de préférence de 1 à 4,

$R_3$ est un radical hydrocarboné divalent, de préférence non aromatique, ayant de 2 à 18 atomes de carbone, de préférence un radical alkylène à chaîne droite ou ramifiée ayant de 2 à 10 atomes de carbone, ou un radical cycloalkylène ayant de 5 à 12 atomes de carbone, ou un radical aralkylène ayant de 7 à 12 atomes de carbone et $R_4$ est H ou

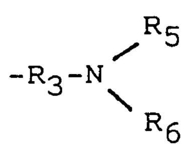 ,

où $R_3$ a la même signification que ci-dessus et

$R_5$,$R_6$, soit indépendamment l'un de l'autre, sont chacun H ou un radical alkyle en $C_1$-$C_{20}$, hydroxyalkyle en $C_1$-$C_{16}$, de préférence

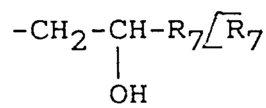 = H ,

alkyle en $C_1$-$C_{12}$, $-CH_2-O-$(alkyle en $C_1$-$C_{12}$), $-CH_2-O-$aryle,

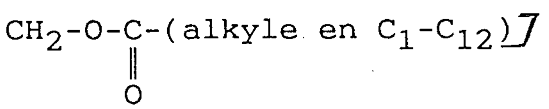 ou 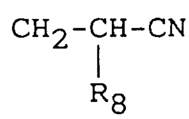

($R_8$ = H ou alkyle en $C_1$-$C_6$), soit

$R_5$ et $R_6$ forment une partie d'un noyau aliphatique à 5, 6 ou 7 chaînons, du moment que $R_4$ n'est pas H quand m vaut zéro.

**8.** Composant durcisseur selon au moins l'une des revendications 1 à 7, caractérisé en ce que les équivalents d'ester de ($a_1$), ainsi que les équivalents éventuellement présents de C=O ou de N=R'$_1$, font avec les équivalents d'amine de ($a_2$) un rapport de 1:2 à 1:20.

**9.** Composant durcisseur selon au moins l'une des revendications 1 à 8, caractérisé en ce qu'il a la formule (III)

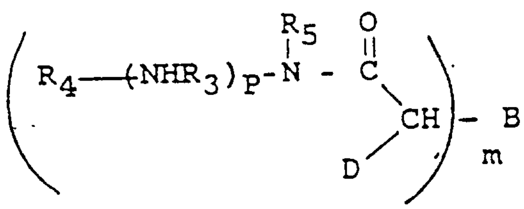 (III)

dans laquelle

B et m ont les mêmes significations que dans la formule (I),

$R_3$, $R_4$ et p ont les mêmes significations que dans la formule (II),

$R_5$ est un hydrogène ou est identique à $R_1$ dans la formule (I),

D est un hydrogène, CN,

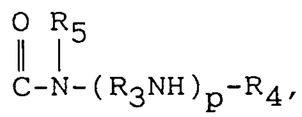

$CONH_2$, $CONR_1H$, $CONR_1R'_1$, $COR_1$ ou $R_1C=NR_1'$, si B est H ou $R_1$ ;

et D est un hydrogène,CN,

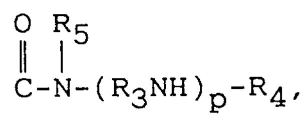

$CONH_2$, $CONR_1H$, ou $CONR_1R'_1$ , si B est

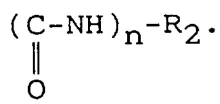

**10.** Mélange durcissable à base de :

un composant durcisseur (A),

un composé (B) qui contient des groupes époxyde et/ou 1,3-dioxolanne-2-one,

éventuellement un diluant (C) ainsi que

éventuellement des additifs (D), caractérisé en ce qu'il contient, comme composant durcisseur, le composant (A) selon l'une ou plusieurs des revendications 1 à 8.

**11.** Mélange durcissable selon la revendication 10, caractérisé en ce que le composant durcisseur (A) a déjà été mis à réagir avec une partie du composant (B).

**12.** Mélange durcissable selon la revendication 10 et/ou 11, caractérisé en ce que le composant (B) est une résine époxyde ayant un poids moléculaire moyen ($\overline{M}_w$) d'environ 300 à environ 20 000.

**13.** Utilisation du composant durcisseur selon au moins l'une des revendications 1 à 9 dans des mélanges durcissables, de préférence dans des préparations de vernis.

**Revendications pour l'Etat contractant suivant : ES**

**1.** Procédé pour préparer un composant durcisseur (A) contenant des groupes amino destiné à des composés (B) qui contiennent des groupes époxydes ou 1,3-dioxolanne-2-one, caractérisé en ce qu'on fait réagir, avec des polyamines ($a_2$),des esters alkyliques à CH actifs ou des produits d'addition d'esters alkyliques à CH actifs sur des isocyanates, dans lesquels on a au moins 1 mol d' ester alkylique à CH actif par équivalent d'isocyanate ($a_1$).

2. Procédé selon la revendication 1, caractérisé en ce que la réaction a lieu à des températures de 20 à 120 °C.

3. Procédé selon la revendication 1 et/ou 2, caractérisé en ce qu'on utilise comme composés ($a_1$) ceux qui ont la formule (I) ci-après

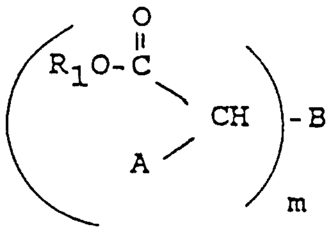 (I)

dans laquelle

$R_1$ = un radical hydrocarboné ayant de 1 à 12 atomes de carbone ;

A = CN, , $CONH_2$, $CONR_1H$, $CONR_1R_1'$, $COR_1$, $R_1C=N'_1$ ou $NO_2$, où $R_1$ et $R'_1$ peuvent être identiques ou différents et ont la signification ci-dessus ;

B = un hydrogène ou $R_1$ avec la signification ci-dessus, avec dans ces deux cas m - = 1 ; ou bien

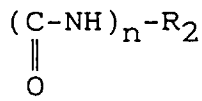

où $R_2$ est un radical hydrocarhoné à n valences pouvant être éventuellement interrompu par des hétéroatomes (O, N), et m = n ≧ 1 , de préférence de 1 à 10.

4. Procédé selon la revendication 3, caractérisé en ce que, dans la formule (I), $R_1$ est un radical alkyle en $C_1$-$C_6$, A est un radical COO(alkyle en $C_1$-$C_6$) ou CO(alkyle en $C_1$-$C_6$), et B est un hydrogène ou le radical

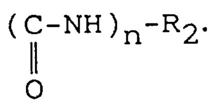

5. Procédé selon la revendication 3 et/ou 4, caractérisé en ce que n vaut 1, 2 ou 3.

6. Procédé selon au moins l'une des revendications 1 à 5, caractérisé en ce que ($a_1$) est un ester de l'acide malonique, de l'acide acétoacétique ou de l'acide cyanoacétique ayant de 1 à 6 atomes de carbone dans le fragment ester, ou un produit d'addition de ces composés sur des isocyanates.

7. Procédé selon au moins l'une des revendications 1 à 6, caractérisé en ce que ($a_2$) contient au moins deux groupes amino primaire ou un groupe amino primaire et un groupe amino secondaire.

8. Procédé selon au moins l'une des revendications 1 à 7, caractérisé en ce que ($a_2$) a la formule (II)

$H_2N$-$(R_3NH)_p$-$R_4$ (II),

dans laquelle

p vaut zéro ou est un nombre entier de 1 à 6, de préférence de 1 à 4,

$R_3$ est un radical hydrocarboné divalent, de préférence non aromatique, ayant de 2 à 18 atomes de carbone, de préférence un radical alkylène à chaîne droite ou ramifiée ayant de 2 à 10 atomes de carbone, ou un radical cycloalkylène ayant de 5 à 12 atomes de carbone, ou un radical aralkylène

ayant de 7 à 12 atomes de carbone et $R_4$ est H ou

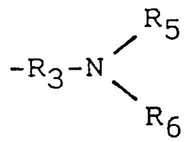,

où $R_3$ a la même signification que ci-dessus et

$R_5$, $R_6$, soit indépendamment l'un de l'autre, sont chacun H ou un radical alkyle en $C_1$-$C_{20}$, hydroxyalkyle en $C_1$-$C_{16}$, de préférence

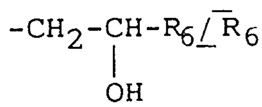 = H ,

alkyle en $C_1$-$C_{12}$, -$CH_2$O-(alkyle en $C_1$-$C_{12}$), -$CH_2$-O-aryle,

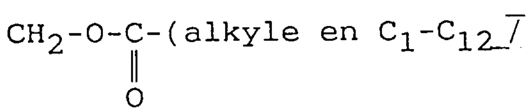 ou 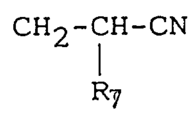

($R_7$ = H ou un radical alkyle en $C_1$-$C_6$), soit

$R_5$ et $R_6$ forment une partie d'un noyau aliphatique à 5, 6 ou 7 chaînons, du moment que $R_4$ n'est pas H quand m vaut zéro.

**9.** Procédé selon au moins l'une des revendications 1 à 8, caractérisé en ce que les équivalents d'ester de ($a_1$), ainsi que les équivalents éventuellement présents de C=O ou de N=R'$_1$, font avec les équivalents d'amine de ($a_2$) un rapport de 1:2 à 1:20.

**10.** Mélange durcissable à base de :

un composant durcisseur (A),

un composé (B) qui contient des groupes époxyde et/ou 1,3-dioxolanne-2-one,

éventuellement un diluant (C) ainsi que

éventuellement des additifs (D), caractérisé en ce qu'il contient comme composant durcisseur le composant (A) selon l'une ou plusieurs des revendications 1 à 8.

**11.** Mélange durcissable selon la revendication 10, caractérisé en ce que le composant durcisseur (A) a déjà été mis à réagir avec une partie du composant (B).

**12.** Mélange durcissable selon la revendication 10 et/ou 11, caractérisé en ce que le composant (B) est une résine époxyde ayant un poids moléculaire moyen ($\overline{M}_w$) d'environ 300 à environ 20 000.

**13.** Utilisation du composant durcisseur selon au moins l'une des revendications 1 à 9 dans des mélanges durcissables, de préférence dans des préparations de vernis.